(19) Europäisches Patentamt / European Patent Office / Office européen des brevets

(11) **EP 2 099 701 B1**

(12) **EUROPÄISCHE PATENTSCHRIFT**

(45) Veröffentlichungstag und Bekanntmachung des Hinweises auf die Patenterteilung:
**10.09.2014 Patentblatt 2014/37**

(21) Anmeldenummer: **07856612.2**

(22) Anmeldetag: **12.12.2007**

(51) Int Cl.:
*G01G 11/00* (2006.01)    *B65G 43/00* (2006.01)
*B65G 43/08* (2006.01)

(86) Internationale Anmeldenummer:
**PCT/EP2007/010864**

(87) Internationale Veröffentlichungsnummer:
**WO 2008/083809 (17.07.2008 Gazette 2008/29)**

(54) **VERFAHREN ZUR ERMITTLUNG DES SPEZIFISCHEN LEISTUNGSBEDARFS EINER IM BETRIEB BEFINDLICHEN GURTBANDFÖRDERANLAGE FÜR SCHÜTTGUT BEI NICHT KONSTANTER BELADUNG**

METHOD FOR DETERMINING THE SPECIFIC POWER REQUIREMENT OF A BELT WEB CONVEYOR SYSTEM FOR BULK GOODS IN OPERATION WITH NONCONSTANT LOADING

PROCEDE DE DETERMINATION DES BESOINS EN ENERGIE SPECIFIQUES D'UNE INSTALLATION DE TRANSPORT A COURROIE EN FONCTIONNEMENT POUR DES PRODUITS EN VRAC EN CAS DE CHARGEMENT NON CONSTANT

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **08.01.2007 DE 102007002015**

(43) Veröffentlichungstag der Anmeldung:
**16.09.2009 Patentblatt 2009/38**

(73) Patentinhaber: **RWE Power Aktiengesellschaft 45128 Essen (DE)**

(72) Erfinder: **ZIEGLER, Manfred 50374 Erftstadt (DE)**

(74) Vertreter: **Kierdorf Ritschel Sattlerweg 14 51429 Bergisch Gladbach (DE)**

(56) Entgegenhaltungen:
**DE-A1- 19 911 642**

- **"DIN 22101 Stetigförderer - Gurtförderer für Schüttgüter - Grundlagen für die Berechnung und Auslegung" 1. August 2002 (2002-08-01), BEUTH VERLAG GMBH , BERLIN [DE] , XP002478045 das ganze Dokument**

**Beschreibung**

Die Erfindung betrifft ein Verfahren zur Ermittlung des spezifischen Leistungsbedarfs einer im Betrieb befindlichen Gurtbandförderanlage für Schüttgut bei nicht konstanter Beladung.

Gurtbandförderanlagen bestehen im einfachsten Fall aus einem um zwei Trommeln umgelenkten und endlos umlaufenden gummielastischen Gurtband. Wenigstens eine der beiden Trommeln ist elektrisch angetrieben und treibt den so umlaufenden Gurt. Zwischen den Trommeln, die im Allgemeinen als Kopfstation und Heckstation bezeichnet werden, wird das Gurtband von drehbaren Tragrollen gestützt, die von Tragrollengerüsten aufgenommen werden. Die Tragrollen dienen der Unterstützung und Ausrichtung des Gurtbandes zwischen den Umlenkstationen und bestimmen darüber hinaus die Muldung des Gurtbandes. Wie bereits erwähnt, wird die zum Treiben des Gurtbandes erforderliche Energie über elektrische Antriebe in die Trommeln des Gurtbandförderers eingeleitet. Der Leistungsbedarf des Gurtbandförderers ist einerseits abhängig von dem den Gurtbandförderer aufgegebenen Massenstrom, andererseits ist dieser abhängig von den unterschiedlichen Bewegungswiderständen des Gurtbandförderers, die sich je nach Ausrichtzustand des Gurtbandes, je nach Verschmutzungszustand desselben oder Wartungszustand der Rollen etc. unterschiedlich darstellen.

Zur Auslegung einer Bandanlage wird üblicherweise deren theoretischer Leistungsbedarf errechnet Siehe hierzu DIN 22101. Hierbei werden die unterschiedlichen Bewegungswiderstände (Haupt-, Neben-, Steigungs- und Sonderwiderstände) einzeln bestimmt. Der Leistungsbedarf errechnet sich aus der Summe dieser Bewegungswiderstände multipliziert mit der Bandgeschwindigkeit. Den größten Teil am Bewegungswiderstand einer Bandanlage hat der Hauptwiderstand, welcher in analoger Art und Weise zur Ermittlung des Reibungswiderstandes eines auf einer schiefen Ebene gezogenen Klotzes ermittelt wird. Dabei entspricht der hierbei verwendete spezifische Bewegungswiderstand einem fiktiven Reibungsbeiwert, der je nach Ausrichtzustand der Bandanlage, Tragrollendurchmesser, Gurtvorspannung etc. variieren kann. Dieser fiktive Reibungsbeiwert wird zur Ermittlung des Hauptwiderstandes der Bandanlage üblicherweise geschätzt. Während des Betriebs der Bandanlage kann sich dieser spezifische Wert schleichend verschlechtern, etwa durch zunehmende Verschmutzung im Untertrum, vor allem aber bei rückbaren Bandanlagen durch Änderung des Ausrichtzustandes der Bandtragegerüste (Unterspülung durch Regen, Verschiebung durch Unachtsamkeit beim Reinigen des Untertrums mittels Hilfsgerät). Aus diesem Grund ist häufig der Ausrichtzustand und damit der spezifische Energieverbrauch der Bandanlagen höher als nötig und verursacht erhebliche, vermeidbare Energiekosten.

Nun könnte angenommen werden, dass durch einfache Leistungsmessung an einer in Betrieb befindlichen Bandanlage eine empirische Ermittlung des spezifischen Bewegungswiderstandes einer Bandanlage möglich ist. Dies wäre beispielsweise wünschenswert, um hieraus Rückschlüsse auf den Wartungszustand der Bandanlage ziehen zu können und/oder um die Wirksamkeit und den Einfluss der ein oder anderen Wartungsmaßnahme in Hinblick auf den Energieverbrauch der Bandanlage überprüfen zu können. In der Praxis hat sich jedoch die Angabe eines spezifischen Bewegungswiderstandes bzw. fiktiven Reibbeiwerts als schwierig erwiesen, da der dem Fördergut aufgegebene Massenstrom in der Regel nicht konstant ist, sondern schwankt. Das heißt, dass das Band über seine Länge unterschiedliche Beladungsquerschnitte aufweist. Gemessen werden können nur die Antriebsleistung der Motoren sowie der aktuelle Massenstrom über eine ggf. vorgesehene Bandwaage. Um Rückschlüsse auf den Wartungszustand der Bandanlage treffen zu können, müsste der Massenstrom aus der Betrachtung eliminiert werden, wobei sich in Versuchen herausgestellt hat, dass sich zwischen der Antriebsleistung und der Bandbeladung kein eindeutiger funktionaler Zusammenhang ableiten lässt, sodass die Angabe eines fiktiven Reibwertes bzw. spezifischen Bewegungswiderstandes mit großer Unsicherheit behaftet ist.

Der Erfindung liegt daher die Aufgabe zugrunde, ein Verfahren der eingangs genannten Art zur Ermittlung des spezifischen Leistungsbedarfs einer in Betrieb befindlichen Gurtbandförderanlage für Schüttgut bei nicht konstanter Beladung bereitzustellen, welches so zuverlässig ist, dass es Rückschlüsse auf den Zustand der Bandanlage zulässt.

Erfindungsgemäß wird ein Verfahren zur Ermittlung des spezifischen Leistungsbedarf in einer im Betrieb befindlichen Gurtbandförderanlage für Schüttgut bei nicht konstanter Beladung vorgeschlagen, welches folgende Schritte umfasst:

   fortlaufende Ermittlung einer Abschnittsbeladung des Gurtbandes für n-Abschnitte gleicher Länge;
   - Berechnen eines beladungsabhängigen Bewegungswiderstandes für jeden der n-Abschnitte, zunächst unter Zuhilfenahme eines geschätzten spezifischen Bewegungswiderstandes;
   - Berechnen einer abschnittsweise benötigten Leistung;
   - Berechnen des Gesamtleistungsbedarfs der Gurtbandförderanlage und Ermitteln eines spezifischen Bewegungswiderstandes durch Vergleich des berechneten Gesamtleistungsbedarfs mit einem gemessenen elektrischen Leistungsbedarf,

wobei eine iterative Ermittlung des spezifischen Bewegungswiderstandes über die Minimierung der Federquadratsumme aus dem Vergleich zwischen errechneter und gemessener Leistung erfolgt.

Das erfindungsgemäße Verfahren geht dabei von der Erkenntnis aus, dass grundsätzlich unterschiedliche Beladungsverteilungen des Gurtbandes bei gleicher durchschnittlicher Beladung einer Bandanlage möglich sind. Je nach Beladungsverteilung kann der Leistungsbedarf der Bandanlage unterschiedlich sein, obwohl der Mittelwert für die durchschnittliche Beladung gleich ist. Hieraus ergibt sich grundsätzlich die Schwierigkeit, einen funktionalen Zusammenhang zwischen Antriebsleistung und Bandbeladung abzuleiten.

Erfindungsgemäß wird dem dadurch Rechnung getragen, dass für n-Abschnitte gleicher Länge des Gurtbandes unterschiedliche Abschnittsbeladungen ermittelt werden. Für jeden der n-Abschnitte ergeben sich somit unterschiedliche Hauptbewegungswiderstände, die auch von der Steigung des Gurtverlaufes in dem betreffenden Abschnitt bezogen auf eine Horizontale abhängig sind. Auf diese Art und Weise lässt sich ein Gesamtleistungsbedarf der Gurtbandförderanlage ermitteln, der dem unterschiedlichen Beladungsquerschnitt über die Länge des Gurtbandes gerecht wird. Durch fortlaufenden Vergleich des berechneten theoretischen Gesamtleistungsbedarfs mit einem gemessenen elektrischen Leistungsbedarf lässt sich iterativ der spezifische Bewegungswiderstand ermitteln, aufgrund dessen unmittelbar auf den Wartungszustand der Gurtbandanlage zurückgeschlossen werden kann.

Auf diese Art und Weise lässt sich für jede Bandanlage im Betrieb individuell ein spezifischer Bewegungswiderstand ermitteln, der unmittelbar Auskunft über den Zustand der Bandanlage in Hinblick auf den Energieverbrauch liefert. So lässt sich die Wirksamkeit bestimmter Wartungsmaßnahmen oder anderer in Hinblick auf den Energieverbrauch der Anlage relevanter Änderungen bei Betrieb der Gurtbandanlage unmittelbar ermitteln und eliminiert von den Einflüssen ungleichmäßiger Beladung identifizieren.

Besonders bevorzugt wird die Abschnittsbeladung mittels einer Bandwaage während des Gurtumlaufs ermittelt, wobei der Zeittakt der Massenstromerfassung mit der Bandgeschwindigkeit synchronisiert wird, sodass die zeitlich veränderte Beladung den bezüglich Leistungsbedarf unterschiedlichen Abschnitten der Bandanlage zugeordnet werden kann. Um die gemessenen Massenströme den einzelnen Abschnitten der Bandanlage zuordnen zu können, werden diese in ihrer Länge dem Zeittakt der Massenstromerfassung angepasst. Liefert beispielsweise eine Bandwaage alle zwei Sekunden einen Messwert, der den 2-Sekunden-Mittelwert der Beladung darstellen sollte, und beträgt die Bandgeschwindigkeit 7,5 m/s, so sollte die Bandanlage in 15 m lange Abschnitte unterteilt sein, wobei zur Berechnung des Bewegungswiderstandes des betreffenden Abschnittes jeweils die mittlere Steigung des Gurtverlaufes dieses Abschnittes zu ermitteln ist.

Zweckmäßigerweise wird in jedem Zeittakt $\Delta t$ für alle n-Abschnitte der Gurtbandanlage der jeweilige theoretische Leistungsbedarf ermittelt und in jedem Zeittakt aus den abschnittsweise ermittelten theoretischen Leistungsbedarfswerten ein theoretischer Gesamtleistungsbedarf ermittelt.

Die Minimierung der Fehlerquadratsumme der Abweichungen zwischen theoretischem und gemessenem Leistungsbedarf über alle Zeitinkremente erfolgt zweckmäßigerweise über einen Zeitraum, der für alle vorkommenden Beladungsschwankungen repräsentativ ist.

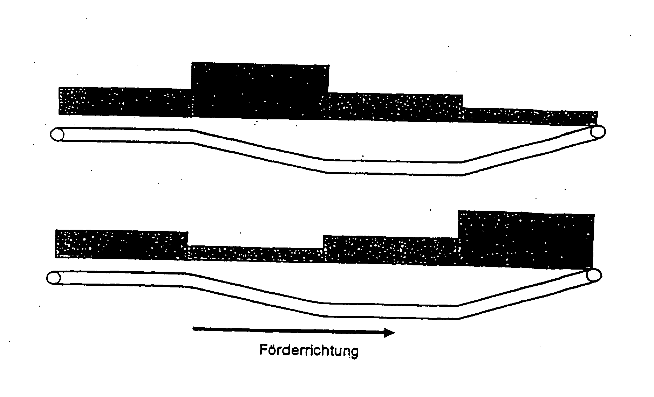

Die Erfindung wird nachstehend anhand eines Beispiels unter Bezugnahme auf die beigefügte Zeichnungsfigur erläutert werden. In der Figur ist verhältnismäßig einfach schematisch eine Gurtbandförderanlage mit zwei unterschiedlichen Beladungsverteilungen bei gleicher durchschnittlichen Beladung einer Bandanlage mit vier Abschnitten dargestellt. Beispielsweise bei einem Gurtbandförderer wie er in modernen Braunkohletagebauen Anwendung findet, beträgt die Gurtbandbreite etwa 2.800 mm. Der Massenstrom bzw. Schüttgutstrom kann zwischen 0 und 35.000 t/h schwanken.

In der Figur sind, wie eingangs bereits erwähnt, zwei verschiedene Beladungszustände einer Bandanlage dargestellt. Es ist einsichtig, dass im unteren Fall - trotz gleicher Durchschnittsbeladung - der Leistungsbedarf erheblich höher ist als im oberen Fall, und zwar insbesondere deshalb, weil der Verlauf der Bandanlage nicht söhlig ist, sodass die Bewegungswiderstände in den einzelnen Abschnitten unterschiedlich sind. Der Steigungswiderstand für einen Meter Höhenunterschied hat etwa denselben Wert wie der Widerstand für einen söhligen Transportweg von 45 m. Bei dem in der Figur gezeigten Fall, bei dem die Massenverteilung jeweils in Form von vier Beladungsblöcken dargestellt ist, wird im oberen Fall der größte Massenblock bergab transportiert, wohingegen im unter Fall der größte Massenblock bergauf transportiert wird.

Bislang wurde aus dem Signal der Bandwaage ein gleitender Mittelwert für die durchschnittliche Beladung der kompletten betrachteten Bandanlage gebildet. Zwischen dem Massenstrom und der Antriebsleistung lässt sich so allerdings, wie ebenfalls bereits erwähnt, kein eindeutiger funktionaler Zusammenhang herstellen.

Erfindungsgemäß wird nun so verfahren, dass die zeitlich veränderliche Beladung den bezüglich Leistungsbedarf unterschiedlichen Abschnitten der Bandanlage zugeordnet wird. Dabei wird hier einmal der Fall angenommen, dass über eine Bandwaage an dem auf das zu betrachtende Gurtband aufgebenden Gurtband der abgezogene Massenstrom kontinuierlich erfasst wird. Die elektrische Leistung wird an dem zu betrachtenden Gurtband über die Leistungsaufnahme der Motoren gemessen. Selbstverständlich kann die Bandwaage auch an dem zu betrachtenden Gurtband vorgesehen sein.

Die Bandwaage liefert alle zwei Sekunden einen Messwert, der einen 2-Sekunden-Mittelwert der Beladung darstellen soll. Die Bandgeschwindigkeit aller Bänder beträgt v=7,5 m/s. Um die gemessenen Massenströme $m'_{L,i}$ den einzelnen Abschnitten der Bandanlage zuordnen zu können, wird die Gurtbandanlage in 15 m lange Abschnitte i unterteilt, zu denen jeweils die mittlere Steigung $\delta_i$ des Gurtverlaufs ermittelt wird.

Die Messwerte der Massenströme müssen mit den Abschnitten synchronisiert werden, d. h. zu der zum Zeitpunkt $t_0$ gemessenen Antriebsleistung $P_0$ gehören für jeden Abschnitt i die Massenströme $m'_{L,i}$ mit demjenigen Zeitversatz, den die Beladung braucht, um die Strecke zwischen Bandwaage und dem entsprechendem Abschnitt i zurückzulegen.

In jedem Zeittakt $\Delta t$ wird für alle Abschnitte der Bandanlage mit den aktuell zugehörigen Beladungsblöcken der theoretische Leistungsbedarf ermittelt und zu einem theoretischen Gesamtleistungsbedarf aufsummiert.

Für diese erste Berechnung ist zunächst von einem geschätzten fiktiven Reibwert bzw. spezifischen Bandwiderstand f auszugehen. Durch Vergleich mit der tatsächlich gemessenen Antriebsleistung und Variation kann der spezifische Widerstand der Gurtbandanlage (fiktiver Reibbeiwert) dahingehend optimiert werden, dass die Abweichungen minimal werden. Diese Optimierung erfolgt über einen repräsentativen Zeitraum, der den größten Teil der vorkommenden Beladungsschwankung abdeckt. Zielfunktion ist die Fehlerquadratsumme der Abweichungen zwischen gemessener und errechneter Leistung über alle Zeitinkremente.

Der Wertebereich für den fiktiven Reibungsbeiwert bzw. spezifischen Bewegungswiderstand schwankt zwischen 0,010 für sehr gut ausgerichtete Anlagen und 0,040 für schlecht ausgerichtete Gurtbandanlagen.

Mittels des zunächst geschätzten spezifischen Widerstandes wird der Hauptwiderstand $F_{H,i}$ eines jeden Teilabschnittes der n-Teilabschnitte der Gurtbandanlage berechnet, und zwar wie folgt:

$$F_{H,i} = l_i \cdot f_i \cdot g \cdot [m'_{R,i} + (m'_G + m'_{L,i}) \cdot \cos\delta],$$

wobei $l_i$ die Länge des Abschnittes bezeichnet, $f_i$ den spezifischen Bewegungswiderstand, g die Erdbeschleunigung, $m'_{R,i}$ die Masse der Gurtrollen des betreffenden Abschnittes, $m'_G$ die Masse des Gurtes selbst, $m'_{L,i}$ die Masse der Beladung und $\delta$ die mittlere Steigung des Gurtverlaufes.

Die abschnittsweise benötigte Leistung errechnet sich so:

$$P = v \cdot (F_H + F_N + F_B + F_{ST} + F_S)/\eta,$$

wobei $F_N$ die Nebenwiderstände, $F_B$ die Beschleunigungswiderstände, $F_{ST}$ die Steigungswiderstände und $F_S$ die Sonderwiderstände sowie $\eta$ den Wirkungsgrad des oder der Antriebe bezeichnen.

Der Beschleunigungswiderstand $F_B$ tritt nur im Bereich der Übergabe auf und berechnet sich zu

$$F_B = v \cdot m'_L/dt,$$

der Steigungswiderstand $F_{ST}$ zu

$$F_{ST} = g \cdot m'_L \cdot \sin(\delta).$$

Nebenwiderstände $F_N$ treten i.a. nur als Schurrenreibung im Bereich von Heck- und Frontstation auf, und zwar erst oberhalb einer konstruktiv bedingten Grenzbeladung. Der bislang beste theoretische Ansatz zur Beschreibung der Schurrenreibung lautet:

$$F_N = 0 \qquad\qquad \text{für } m'_L <= m'_{Grenz}, \text{ bzw.}$$

$$F_N = k \cdot (m'_L - m'_{Grenz}) \qquad \text{für } m'_L > m'_{Grenz}$$

Der Grenzwert der Beladung, ab der Schurrenreibung auftritt, liegt bei den B 2.800er Bandanlagen (2.800 mm Breite) bei ca. 18.000 t/h. Der beladungsunabhängige Teil des Hauptwiderstandes - also $l \cdot f \cdot g(m'_R + m'_G \cdot \cos(\delta))$-kann über alle Teilabschnitte zusammenfasst werden und entspricht (multipliziert mit $v/\eta$) der Leerlaufleistung $P_{leer}$.

Der beladungsabhängige Teil des Hauptwiderstands und der ebenfalls beladungsabhängige Steigungswiderstand können für jeden Abschnitt i zu folgendem Term $F_i$ zusammengefasst werden:

$$F_i = m'_{L,i} \cdot g \cdot (f \cdot \cos(\delta_i) + \sin(\delta_i))$$

Die gesamte theoretische Antriebsleistung ist somit

$$P_{ges} = [\sum F_i + F_B + F_{N,Front} + F_{N,Heck}] \cdot v/\eta + P_{leer}$$

Die oben erwähnten Einflussfaktoren, über welche die Optimierung läuft, sind Folgende:

1. $f$      fiktiver Reibbeiwert
2. $P_{leer}$      Leeraufleistung
3. $m'_{Grenz,Front}$      Grenzbeladung, ab der im Frontabschnitt Schurrenreibung auftritt
4. $k_{Front}$      Proportionalitätsfaktor für Zusammenhang zwischen Beladung und Schurrenreibung Front oberhalb der Grenzbeladung
5. $m'_{Grenz, Heck}$      Grenzbeladung, ab der im Heckabschnitt Schurrenreibung auftritt
6. $k_{Heck}$      Proportionalitätsfaktor für Zusammenhang zwischen Beladung und Schurrenreibung Heck oberhalb der Grenzbeladung

Mit Abstand den größten Einfluss haben der f-Wert und die Leerlaufleistung, wobei die Leerlaufleistung zum größten Teil der Bewegungswiderstand der Totmassen (Gurt, Tragrollen) und somit auch abhängig vom f-Wert ist. Die Faktoren 3 bis 6 verbessern nochmals die Güte der Nachbildung, können aber ggf. vernachlässigt werden.

Das erfindungsgemäße Verfahren hat das Ziel, über die Zuordnung des gemessenen Massenstroms zu den einzelnen Abschnitten einer Bandanlage und der gemessenen Antriebsleistung die Einflussfaktoren auf den Leistungsbedarf genau darstellen zu können. Hierzu wird zu jedem Zeitpunkt, zu dem ein Messwertepaar aus Antriebsleistung und Massenstrom vorliegt, für jeden einzelnen Abschnitt der theoretische Leistungsbedarf errechnet, und zwar zunächst anhand von Schätzwerten für diese Einflussfaktoren. Die Summe dieser theoretischen Abschnittsleistungen ergibt für jeden Zeitpunkt die theoretische Antriebsleistung, welche mit der gemessenen Antriebsleistung verglichen werden kann. Die Summe der Fehlerquadrate ist ein Maß für die Güte der Schätzwerte und wird für eine iterative Optimierung dieser Schätzwerte verwendet.

**Patentansprüche**

1. Verfahren zur Ermittlung des spezifischen Leistungsbedarfs einer in Betrieb befindlichen Gurtbandförderanlage für Schüttgut bei nicht konstanter Beladung, folgende Schritte umfassend:

   - fortlaufende Ermittlung einer Abschnittsbeladung des Gurtbandförderers für n-Abschnitte gleicher Länge;
   - Berechnen eines beladungsabhängigen Bewegungswiderstandes für jeden der n-Abschnitte der Gurtbandförderanlage, zunächst unter Zuhilfenahme eines geschätzten spezifischen Bewegungswiderstandes;
   - Berechnen einer abschnittsweise benötigten Leistung;
   - Berechnen des Gesamtleistungsbedarfs der Gurtbandförderanlage und
   - Ermitteln eines spezifischen Bewegungswiderstandes durch Vergleich des berechneten Gesamtleistungsbedarfs mit einem gemessenen elektrischen Leistungsbedarf,
   wobei eine iterative Ermittlung des spezifischen Bewegungswiderstandes über die Minimierung der Fehlerquadratsumme aus dem Vergleich zwischen errechneter und gemessener Leistung erfolgt, um hieraus Rückschlüsse auf den Wartungszustand der Gurtbandförderanlage ziehen zu können.

2. Verfahren nach Anspruch 1, **dadurch gekennzeichnet, dass** die Abschnittsbeladung mittels einer Bandwaage während des Gurtumlaufes erfolgt, wobei der Zeittakt der Massenstromerfassung mit der Bandgeschwindigkeit synchronisiert wird.

3. Verfahren nach einem der Ansprüche 1 oder 2, **dadurch gekennzeichnet, dass** in jedem Zeittakt $\Delta t$ für alle n-

Abschnitte der Gurtbandförderanlage der jeweilige theoretische Leistungsbedarf ermittelt wird und dass in jedem Zeittakt aus den abschnittsweise ermittelten Leistungsbedarfswerten ein theoretischer Gesamtleistungsbedarf ermittelt wird.

4. Verfahren nach einem der Ansprüche 1 bis 3, **dadurch gekennzeichnet, dass** die Minimierung der Fehlerquadratsumme der Abweichung zwischen theoretischem und gemessenem Leistungsbedarf über alle Zeitinkremente eines Zeitraums erfolgt, der für alle vorkommenden Beladungsschwankungen repräsentativ ist.

## Claims

1. Method for determining the specific power requirement of a conveyor belt plant for bulk goods when it is in operation but without being constantly loaded, comprising the following steps:

   - the continuous determination of the loading of sections of the conveyor belt plant for n-sections of equal length;
   - the calculation of a loading related movement resistance for each of the n-sections of the conveyor belt plant, with the initial use of an estimated specific movement resistance;
   - the calculation of the power requirement for each section;
   - the calculation of the total power requirement for the conveyor belt plant, and
   - the calculation of a specific movement resistance with a measured electrical power requirement,
   whereby an iterative determination of the specific movement resistance is carried out by minimising the sum of the squared errors from a comparison of calculated and measured performance, so that decisions can be made with regard to the state of the maintenance of the conveyor belt plant.

2. Method according to Claim 1 above, **characterised in that** the section by section loading is carried out with a belt weigher while the belt is in operation, whereby the timing of the mass flow calculation is synchronised with the speed of the belt.

3. Method according to either of the Claims 1 or 2 above, **characterised in that** at each timing point At, the respective theoretical power requirement is determined for all n-sections of the conveyor belt plant and that at each timing point a theoretical overall power requirement can be calculated from the power requirements calculated for each section.

4. Method according to any one of the Claims 1 to 3 above, **characterised by** the fact that minimisation of the sum of the squared errors of the deviation between the theoretical and the measured power requirement takes place over all time increments of a time period, which is representative for all fluctuations occurring in loading.

## Revendications

1. Procédé permettant de déterminer les besoins spécifiques en énergie d'une installation de transport à courroie pour matières en vrac, en cours de service, en cas de chargement non constant, comportant les étapes suivantes :

   - déterminer en continu le chargement d'un tronçon du transporteur à courroie pour n tronçons de même longueur ;
   - calculer une résistance au déplacement en fonction du chargement pour chacun des n tronçons du transporteur à courroie, tout d'abord à l'aide d'une résistance au déplacement spécifique estimée ;
   - calculer une puissance nécessaire par tronçons ;
   - calculer les besoins en énergie globaux du transporteur à courroie ; et
   - déterminer une résistance au déplacement spécifique par la comparaison entre les besoins en énergie globaux calculés et les besoins en énergie électrique mesurés,
   une détermination itérative de la résistance au déplacement spécifique étant effectuée moyennant la minimisation de la somme du carré des erreurs à partir de la comparaison entre la puissance calculée et la puissance mesurée, afin de pouvoir en tirer des conclusions sur l'état de maintenance du transporteur à courroie.

2. Procédé selon la revendication 1, **caractérisé en ce que** le chargement d'un tronçon est effectué au moyen d'une bascule à courroie pendant le déplacement de la courroie, le cycle de détection du débit massique étant synchronisé avec la vitesse de la bande.

**3.** Procédé selon la revendication 1 ou 2, **caractérisé en ce que** dans chaque cycle Δt, les besoins en énergie théoriques respectifs sont déterminés pour tous les n tronçons du transporteur à courroie et **en ce que** dans chaque cycle, les besoins en énergie globaux théoriques sont déterminés à partir des valeurs calculées des besoins en énergie par tronçon.

**4.** Procédé selon l'une quelconque des revendications 1 à 3, **caractérisé en ce que** la minimisation de la somme du carré des erreurs de la divergence entre les besoins en énergie théoriques et les besoins en énergie mesurés est effectuée sur tous les incréments de temps d'un laps de temps qui est représentatif de toutes les variations du chargement pouvant se produire.

Förderrichtung